Europäisches Patentamt

European Patent Office

Office européen des brevets

(19)

(11) Veröffentlichungsnummer: **0 213 298**
**B1**

(12) **EUROPÄISCHE PATENTSCHRIFT**

(45) Veröffentlichungstag der Patentschrift:
23.11.89

(21) Anmeldenummer: 86108323.6

(22) Anmeldetag: 19.06.86

(51) Int. Cl.⁴: **B 01 D 53/08**, B 01 D 46/34

(54) Einrichtung zur Halterung und Führung von Schichten.

(30) Priorität: 24.07.85 DE 3526426

(43) Veröffentlichungstag der Anmeldung:
11.03.87 Patentblatt 87/11

(45) Bekanntmachung des Hinweises auf die Patenterteilung: 23.11.89 Patentblatt 89/47

(84) Benannte Vertragsstaaten:
AT BE CH DE FR GB LI NL

(56) Entgegenhaltungen:
EP–A– 0 198 133
DE–A– 2 626 939
DE–B– 1 946 457

(73) Patentinhaber: KERNFORSCHUNGSZENTRUM KARLSRUHE GMBH
Weberstrasse 5 Postfach 3640
D-7500 Karlsruhe 1 (DE)

Lufttechnik Bayreuth Rüskamp GmbH
Pottensteiner Str. 6
D-8580 Bayreuth (DE)

(72) Erfinder: Die Erfinder haben auf ihre Nennung verzichtet

(74) Vertreter: Gottlob, Peter
Kernforschungszentrum Karlsruhe GmbH Stabs.
Patente und Lizenzen Weberstrasse 5
D-7500 Karlsruhe 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Einrichtung zur Halterung und Führung von Schichten, die schütt- und rieselfähiges Material enthalten und die aus mindestens zwei miteinander in Kontakt befindlichen Schichten besteht, die im wesentlichen vertikal angeordnet sind, bei der die Schichten relativ zueinander vertikal bewegbar in einem Gehäuse untergebracht und quer anströmbar sind und bei der mindestens auf der Anströmseite ein erstes Rückhalteteil für das Material vorgesehen ist, welches Öffnungen besitzt, die einen ungehinderten Strom durch dasselbe ermöglichen.

Eine derartige Einrichtung ist aus der DE-OS 29 46 390 bekannt. Dem Rückhalteteil für granulatförmiges Material schließt sich aber erst das eigentliche Filterelement an, welches als Filterplatte mit einem gaspermeablen Filterelement ausgebildet ist. Es besteht aus Fasern, die zu einem Tuch verwoben oder geordnet sind und somit einen erheblichen Strömungswiderstand im Gasstrom erzeugen. Allerdings könnte eine solche Einrichtung für die Ausbildung eines Mehrschicht-Schüttschichtfilters verwendet werden, das jedoch immer aus Einzelschichten bestehen würde, die mittels gasdurchlässigen Wänden oder räumlich voneinander (DE-OS 29 11 712) getrennt wären. Diese Methoden sind aber unpraktisch, da entweder die Trennwände regelmäßig durch Verklebungen der Schüttschicht und Staubablagerungen verstopfen oder das Raumvolumen zu groß und der Herstellungsaufwand zu hoch wird.

Die Verwendung von Rückhalteteilen zur beiderseitigen Begrenzung einer Wander- bzw. Schüttschicht ist ebenfalls bekannt (DE-OS 33 17 906). Die Rückhalteteile des hülsenförmigen Granulatfilters bestehen hierbei aus übereinander angeordneten äußeren konisch nach innen geneigten Ringen, aus übereinander angeordneten inneren, konisch nach außen geneigten Ringen und dem Granulat, das im Ringspalt zwischen den Ringen nach unten strömt. Die Breite der äußeren und inneren Ringe sowie der Abstand zwischen diesen ist derart, daß das mit einem bestimmten Böschungswinkel fließende Granulat nicht überläuft (Rückhaltung). Diese Methode erlaubt zwar den Abzug des Granulats einer Schicht ohne Überlauf, aber sie ist nicht zur direkten Hintereinanderschaltung mehrerer solcher Schichten und einen getrennten Abzug derselben geeignet, wenn der Austausch der Materialien der einzelnen Schichten der Beanspruchung bei der Abscheidung angepaßt werden soll.

Aus der DE-B-1 946 457 und der EP-A-0 198 133 sind weitere gattungsgemäße Wanderbetteinrichtungen bekannt, die jedoch bezüglich des Schichten- bzw. Wanderbettmaterials auch nicht genügend flexibel sind.

Die der Erfindung zugrundeliegende Aufgabe besteht somit darin, die e. g. Einrichtung derart auszubilden, daß eine kompakte Konstruktion einer Halterung und Führung von Schüttschichten ermöglicht wird, die in mehrere Einzelschichten aufteilbar ist, die wiederum kontinuierlich oder quasi kontinuierlich getrennt voneinander abgezogen und durch frisches Schüttmaterial ersetzbar sind. Die Schichtführung soll dabei dem Böschungswinkel des Schichtmateriales angepaßt werden können.

Die Lösung ist erfindungsgemäß in überraschend einfacher Weise so vorgesehen, wie es im kennzeichnenden Teil des Patentanspruches beschrieben ist.

Während demnach die äußeren Trennwände zwischen denen sich die Schüttschicht befindet, bekannte gasdurchlässige Wände darstellen, die aus schräggestellten, im Abstand übereinander angeordneten Flächen bestehen können, sind erfindungsgemäß im inneren der Schüttschicht pro Einzelschicht Leitflächen mit variabler Neigung vorgesehen, die erst bei Bewegung von Teilen der Schüttschicht Einzelschichten erzeugen. Für die Einzelschichten werde getrennte Abzugsvorrichtungen vorgesehen. Bei Betätigung einer einzelnen Abzugsvorrichtung wird nur die zugehörige Einzelschicht in Bewegung gesetzt, während die anderen Einzelschichten stehen bleiben. Wenn nun auch die Einzelschichten noch mit getrennter Schüttgutversorgung ausgestattet werden, ist es möglich, in den Einzelschichten verschiedene Stoffe als Schüttgut einzusetzen, wobei eine geringe Vermischung zwischen den Schichten möglich, aber nicht schädlich wäre.

Die erfindungsgemäße Einrichtung ermöglicht also den Einsatz von mehreren Einzelschichten mit variierbaren Materialien, die unabhängig voneinander ausgetauscht werden können, auf kleinstem Raum und mit geringstem Aufwand. Trennwände zwischen den Einzelschichten entfallen und damit das Problem von Verstopfungen und Verklebungen zwischen den Einzelschichten. Da die Einrichtung nur noch zwei äußere Trennwände, z. B. beim Einsatz als Filter je eine für den Gaseintritt- und den Gasaustritt, besitzt, wird die Beseitigung von Störungen durch Verstopfen und Verkleben vereinfacht.

Die Erfindung ist beispielsweise für die Filterung von Fluid-Strömen oder als Wärme- und Stoffübertrager einsetzbar.

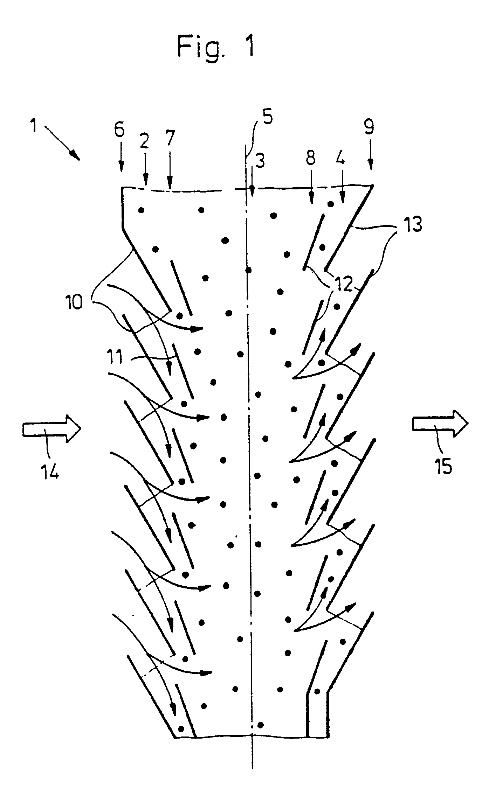

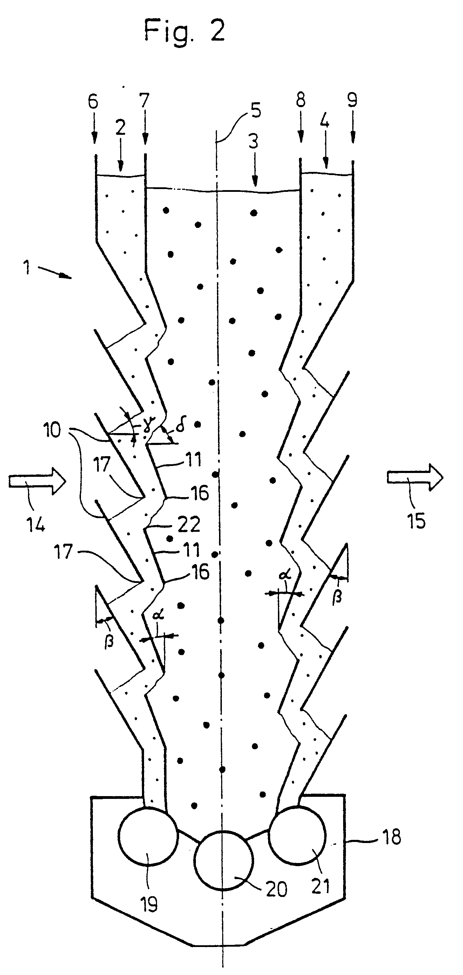

Die Erfindung wird im folgenden anhand eines Ausführungsbeispiels sowohl für die Einrichtung als auch den Anwendungsfall mittels der Figuren 1 und 2 näher erläutert.

Die Figur 1 zeigt im Schnitt schematisch ein Schüttschichtfilter 1 in einem Gehäuse mit drei verschiedenen Materialschichten 2 bis 4, welche es als Wanderbettfilter im wesentlichen von oben nach unten, d. h. längs der Vertikalen 5 mit gleicher oder voneinander abweichender Geschwindigkeit durchlaufen. Als Filtermaterial kann z. B. Sand oder aber auch Granulat bzw. ein schütt- und rieselfähiges Material vorgesehen werden, wobei das Material von Schicht zu Schicht sich von der Beschaffung her je nach Erfordernis unterscheiden darf. Nachgefüllt wird das Material 2 bis 4 von oben, abgezogen einzeln unten.

Der Aufbau des Schüttschichtfilters sieht mehrere, im Prinzip parallel zueinander verlaufende, vertikale Rückhalte- und Leitteile 6 bis 9 vor, die im einzelnen aus Streifen 10 bis 13 bestehen. Diese Streifen 10 bis 13 sind jeweils von außen nach innen zur Vertikalen 5 hin konisch geneigt, wobei sie mit einer zur Vertikalen 5 parallelen Linie einen bestimmten Winkel (α, β) einschließen (siehe Figur 2). Die Streifen 10 bis 15 geben ihren jeweiligen Rückhalte- bzw. Leitteilen 6 bis 9 das Aussehen von Jalousien (sie können auch rotationssymmetrisch um die Vertikale 5 herum zu Ringen ausgebildet sein).

Der zu filternde Strom wird im dargestellten Falle als Querströmung 14 an das Schüttschichtfilter 1 herangeführt. Die Streifen 10 des ersten Rückhalteteils 6 lenken und teilen diese Querströmung 14 in Einzelwege auf (siehe Pfeile), die praktisch zwischen den Streifen 11 bis 13 der weiteren Leit- und Rückhalteteile 7 bis 9 quer, d. h. horizontal durch das Filter 1 hindurchströmen bis zur Vereinigung 15 auf der Abströmseite.

Die beiden Leitteile 7 und 8 besitzen die Fähigkeit als Trennwände (nicht vorhandene) zu funktionieren, wenn z. B. die äußeren Schichten 2 und 4 gegenüber der, z. B. stehenden, inneren Schicht 3 bewegt werden sollen. Dieser Vorgang kann mittels der Figur 2 näher erläutert werden. Der Übersichtlichkeit sind hierbei die Pfeile und einige Bezugszeichen weggelassen, da sie für die Erklärung nicht notwendig sind. Die drei Schichten 2 bis 4 sollen demnach gemeinsam einen Querstrom 14 bis 15 reinigen. Die Breite und der Abstand der Streifen 10 des Rückhalteteils zueinander bzw. die Geometrie, sind hierzu derart bemessen bzw. auszulegen, daß das Material der Schicht 2 nicht überläuft. Zur Bemessung ist die Kenntnis des Böschungswinkels γ erforderlich.

Die geometrische Lage, die Breite und die Winkel α, β der Streifen des Rückhalteteils 6 bzw. 9 und Leitteils 7 bzw. 8 zur Vertikalen 5 hängt im wesentlichen vom Böschungswinkel δ der inneren Schicht 3 ab. Es muß lediglich gewährleistet werden, daß die unteren Längskanten 16 der Streifen 11 so liegen, daß zwar das Material der Schicht 2 an den unteren Längskanten 17 der Streifen 10 des Rückhalteteils 6 und den oberen Längskanten 22 der Streifen 11 vorbeifließt, das Material der Schicht 3 aber wiederum von den oberen Längskanten 22 der Streifen 11 zurückgehalten wird, d. h. nicht überläuft. Die Leitbleche werden vorteilhaft so angeordnet, daß die unteren Kanten 17 der äußeren Rückhalteteile 10 genau senkrecht über den oberen Kanten 22 der inneren Leitteile 11 angebracht sind. Die Böschungen der inneren Schicht 3 bilden somit eine Gleitfläche für das Material der Schicht 2, wenn dies abgezogen bzw. schneller bewegt wird als die Schicht 3. Die gleichen Überlegungen und Erfordernisse gelten für die Rückhalteteile 8 und 9 zueinander bzw. zur Abströmseite 15 hin. Die geometrische Lage der Leit- und Rückhalteteile 8, 9 braucht nicht mit der der übrigen Rückhalte- und Leitteile 6, 7 zu korrespondieren. Im vorliegenden Fall beträgt die Tiefe (Schlitzlänge) der Streifen 10 bis 13 700 mm. Die Winkel bezitzen die Werte 21 bzw. 30°. Die Breiten der Streifen 10 und 13 betragen 230 mm und die der Streifen 11 und 12 240 mm. Im einzelnen sind sämtliche geometrischen Abmessungen, abhängig von Filtermaterialien und Reinigungsbedingungen optimierbar.

Am unteren Ende des Schüttschichtfilters 1 ist im Prinzip eine Abzieheinrichtung 18 dargestellt, in welcher pro Schicht 2 bis 4 eine getrennt betätigbare Abzugstrommel 19 bis 21 vorgesehen ist. Auch hier können bekannte Vorrichtungen verwendet werden. Maßgeblich sind die Mengen des abzuziehenden Materials der drei Schichten 2 bis 4.

Als Schüttgutaustrag kann auch unter dem unteren Konus eine ebene oder leicht gebogene Platte angeordnet werden, die im Stillstand durch den normalen Schüttwinkel des Schüttgutes ein Abfließen verhindert, in Vibration versetzt, jedoch durch Verringerung der Schüttwinkels das Schüttgut abfließen läßt.

Der Abstand zwischen Platte und unterem Konus sowie die Schwingweite der Platte sind einstellbar, so daß die Austragsmenge pro Zeiteinheit den Betriebsbedürfnissen angepaßt werden kann.

Der gesamte Druckverlust $\Delta p_{ges}$ des Schüttschichtfilters während der Beladung ist im wesentlichen gegeben durch die Anströmgeschwindigkeit des Gases, den Staubeintrag und Schüttgutaustrag. Der Wert für $\Delta p_{ges}$ ist in weitem Bereich durch die erwähnten Parameter wählbar. Zur Einhaltung möglichst konstanter Abscheideleistung des Filters ist eine möglichst geringe Schwankung von $\Delta p_{ges}$ während des Schüttgutaustrages erforderlich. Der Druckverlust $\Delta p_{ges}$ dient als Meßgröße zur Steuerung der Austragsorgane 19-21 für das Schüttgut. Diese Vorgehensweise wurde durch die zusätzliche Messung des Differenzdruckes $\Delta p_1$ der ersten (rohgasseitigen) Schüttschicht 2 und durch die Steuerung des Austragsorganes 19 dieser Schicht 2 in Abhängigkeit von $p_1$ ergänzt. Der Wert für $\Delta p_1$ ist unabhängig von $\Delta p_{ges}$ wählbar, er wird vorzugsweise auf maximal 5 mbar eingestellt. Der Gesamtdifferenzdruck dient als Meßgröße zur Steuerung des Schüttgutaustrags der übrigen Schichten. Damit ist gewährleistet, daß $\Delta p_{ges}$ nie überschritten wird, weiterhin werden dadurch Verstopfungen durch erhöhten Staubeintrag in die erste Schicht 2 sicher vermieden.

Die Abscheideleistung des Filters ist durch Wahl geeigneter Schüttgutmaterialien in weitem Bereich variabel. Die Verwendung von rundkantigen und scharfkantigen (gebrochenen) Materialien mit Korngrößen bis 12 mm ist möglich.

Der kontinuierliche Betrieb des Filtes bei vorgegebenem $\Delta p_{ges}$ erfordert ein Gleichgewicht zwischen eingetragener Staubmenge und der am Schüttgut angelagerten und mit diesem ausgetragenen Staubmenge. Im Hinblick auf einen wirtschaftlichen Betrieb des Filters und einer Steigerung des Abscheidegrades des Filters ist die Menge des auszutragenden Schüttgutes zu minimieren. Dies ist neben der o.g. Steuerung durch Gestalt und Betriebsweise der Austragsorgane 19-21 erreichbar.

Folgende Zusammenhänge wurden festgestellt :

| Eingetragene Staubmenge (g/h) | Ausgetragene Schüttgutmenge (kg/h) | Abscheidegrad (%) |
|---|---|---|
| 300 | 100 | 96 |
| 300 | 30 | 98 |

Das Schüttschichtfilter kann bei Anströmgeschwindigkeiten bis 2 m/sec. betrieben werden.

Als Anwendungsfall ist die Abscheidung von Fluorwasserstoff, wobei gebrochener Kalkstein ($CaCO_3$) als Schüttgut verwendet wird, möglich.

## Patentansprüche

Einrichtung zur Halterung und Führung von mindestens zwei, miteinander in Kontakt befindlichen und quer angeströmten, im wesentlichen vertikal angeordneten Schichten, die schütt- und rieselfähiges Material enthalten, wobei die Schichten relativ zueinander vertikal bewegbar in einem Gehäuse untergebracht sind und mindestens auf der Anströmseite ein erstes Rückhalteteil für das Material vorgesehen ist, welches Öffnungen besitzt, die einen ungehinderten Strom durch dasselbe ermöglichen und innerhalb des Materiales zwischen den Schichten mindestens ein Leitteil angeordnet ist, welches im Material bei Bewegung eine Trennung der Schichten bewirkt, aber einen Querstrom unbehindert läßt, wobei die Rückhalte- und Leitteile jeweils aus parallel in Abstand zueinander verlaufenden Flächen bestehen, die in Winkel zur Anströmrichtung bzw. zur Vertikalen ausgerichtet sind, dadurch gekennzeichnet, daß die Neigung (α, β) der Flächen (10-13) jedes der Rückhalte- und Leitteile (6-9) gegenüber der Vertikalen (5) variabel einstellbar und ihre Breite unterschiedlich ausbildbar ist und daß für jede Schicht (2-4) eine getrennt betätigbare Abzugstrommel (19-21) vorgesehen ist.

## Claims

Device for supporting and guiding at least two, substantially vertically disposed layers which are in contact with each other and have material flowing therethrough, such layers containing pourable and fluid material, wherein the layers are accommodated in a housing so as to be vertically displaceable relative to each other, and a first retaining member for holding-back the material is provided at least at the inlet end, which member has openings which permit material to flow unhindered therethrough, and at least one guide member is disposed within the material between the layers and effects a separation of the layers in the material during displacement, but permits an unhindered transverse flow, wherein the retaining and guide members are each formed from faces which extend parallel to one another with a spacing from each other and are aligned at an angle relative to the flow direction and relative to the vertical respectively, characterised in that the inclination (α, β) of the faces (10-13) of each of the retaining and guide members (6-9) relative to the vertical (5) is variably adjustable, and the width of said faces can be varied, and in that a separately actuatable discharge drum (19-21) is provided for each layer (2-4).

## Revendication

Dispositif pour maintenir et guider au moins deux couches se trouvant en contact et balayées perpendiculairement, disposées verticalement pour l'essentiel, qui contiennent du matériau qu'on peut verser et qui peut couler, les couches étant mobiles verticalement l'une par rapport à l'autre et déposées dans un boîtier, et au moins sur la face d'arrivée du balayage est prévue une première pièce de retenue pour le matériau, qui possède des ouvertures, qui permettent un écoulement sans entrave à travers ces ouvertures et à l'intérieur du matériau entre les couches, est prévue au moins une pièce de guidage qui, dans le matériau provoque une séparation des couches, lors du mouvement, mais, laisse passer un courant transversal, les pièces de retenue et de guidage étant constituées de surfaces parallèles se trouvant à distance l'une de l'autre, qui fait un angle avec la direction de balayage ou avec la verticale, caractérisé en ce que l'inclinaison (α, β) des surfaces (10-13) de chacune des pièces de retenue et de guidage peut être réglée de manière variable vis-à-vis de la verticale (5) et leur largeur peut être choisie de manière différente et que pour chaque couche (2-4) est prévu un tambour d'évacuation (19-21) qui peut être entraîné séparément.

Fig. 1

# Fig. 2